# EUROPÄISCHE PATENTSCHRIFT

(11) **EP 0 995 491 B1**
(45) Veröffentlichungstag und Bekanntmachung des Hinweises auf die Patenterteilung: **23.07.2003**
(21) Anmeldenummer: 99118366.6
(22) Anmeldetag: 16.09.1999
(51) Int. Cl.: B01J 19/32, B01J 8/02, F28D 9/00, F28F 3/14

(54) **Reaktor für die katalytische Umsetzung von Reaktionsmedien, insbesondere von gasförmigen Reaktionsmedien**
Reactor for the catalytic conversion of reaction media, in particular gaseous reaction media
Réacteur pour la conversion catalytique des milieux réactionels, specifiquement des milieux réactionels gazeux

(30) Priorität: 20.10.1998 DE 19848208
(43) Veröffentlichungstag der Anmeldung: 26.04.2000
(73) Patentinhaber: DEG Engineering GmbH, 45881 Gelsenkirchen (DE)
(72) Erfinder: Daun, Klaus-Dieter Dipl.Ing., 45289 Essen (DE)
(74) Vertreter: Honke, Manfred, Dr.-Ing.

(56) Entgegenhaltungen:
- EP-A- 0 766 999
- EP-A- 0 867 220
- WO-A-99/29416
- US-A- 4 029 146
- US-A- 5 725 810

## Beschreibung

Die Erfindung betrifft einen Reaktor für die katalytische Umsetzung von Reaktionsmedien, insbesondere von gasförmigen Reaktionsmedien, mit einem Plattenwärmetauscher zum Kühlen eines Katalysators in einem Reaktorbehälter, wobei in dem Reaktorbehälter nebeneinander mit vorgegebenem Abstand voneinander Wärmetauscherplatten angeordnet und zwischen den Wärmetauscherplatten der von dem jeweiligen Reaktionsmedium durchströmte Katalysator unter Festbettbildung angeordnet ist, mit einer Kühlmediumzuführung im Bereich der Behälterdecke und einer Kühlmediumabführung im Bereich des Behälterbodens, wobei die Wärmetauscherplatten ein oder mehrere von dem Kühlmedium durchströmte Plattenpakete aus Thermoblechen bilden und der Plattenwärmetauscher auf einen Siebboden aufgesetzt ist, ferner der Siebboden eine Maschenweite aufweist, die geringer als die Korngröße der Katalysatoren ist, wobei im Bereich des Behälterbodens eine Reaktionsmediumzuführung und im Bereich der Behälterdecke eine Reaktionsmediumabführung vorgesehen und das jeweilige Reaktionsmedium im Gegenstrom zu dem Kühlmedium geführt ist.

Bei einem derartigen Reaktor nach älterem Recht gemäß Patentanmeldung 197 54 185.2 kann an Stelle des Kühlmediums auch mit einem Heizmedium gearbeitet werden, wenn bei der katalytischen Reaktion Wärme nicht abgeführt, sondern zugeführt werden muß. Stets wird eine einwandfreie Temperaturlenkung entlang der Reaktionsstrecke erreicht. Denn bei Thermoblechen handelt es sich um mindestens zwei Blechplatten aus rostfreiem Stahl, die an vorgegebenen Punkten zusammengeschweißt und unter gleichsam Kissenbildung derart ausgeformt sind, daß elliptische Strömungskanäle entstehen, welche infolge der kissenförmigen Ausbildung die Turbulenz der Strömung erhöhen und damit zu hervorragenden Wärmeübertragungsverhältnissen führen. In diesen Strömungskanälen zirkuliert das Kühlmedium oder gegebenenfalls auch Heizmedium. Derartige Thermobleche sind selbsttragend und ermöglichen die Verwirklichung eines kompakten Wärmetauschers mit großer Heizflächendichte ohne Strömungstodzonen. Da die Thermobleche nicht nur die Funktion der Wärmetauscherplatten übernehmen, sondern auch die für das Kühlmedium (gegebenenfalls Heizmedium) erforderlichen Strömungskanäle bilden, kann im Gegenstromverfahren gearbeitet werden, zumal sich der Festbettkatalysator in den Zwischenräumen zwischen den Wärmetauscherplatten bzw. Thermoblechen befindet.

Bei dieser älteren Ausführungsform wird der Plattenwärmetauscher aus den Thermoblechen an die Behälterinnenwand angepaßt. Diese Anpassung an den Behältermantel ist insbesondere dann, wenn es sich um einen Reaktorbehälter mit kreisrundem Querschnitt handelt, in fertigungstechnischer Hinsicht verhältnismäßig aufwendig und folglich auch kostenaufwendig. - Hier will die Erfindung Abhilfe schaffen.

Der Erfindung liegt die Aufgabe zugrunde, einen Reaktor für die katalytische Umsetzung von Reaktionsmedien, insbesondere von gasförmigen Reaktionsmedien, der eingangs beschriebenen Ausführungsform zu schaffen, der sich durch eine in fertigungstechnischer Hinsicht besonders einfache und kostensparende Bauweise auszeichnet.

Diese Aufgabe löst die Erfindung bei einem gattungsgemäßen Reaktor dadurch, daß das oder die Plattenpakete eine gegenüber dem Siebboden bodenfreie Einhausung aufweisen, und daß das oder die eingehauste Plattenpakete umfangseitig anpassungsfrei in den Reaktorbehälter eingesetzt sind. Im Rahmen der Erfindung kann die Siebbodenfläche an die bodenfreie Einhausungsfläche angepaßt sein. - Diese Maßnahmen der Erfindung haben zur Folge, daß sich der Plattenwärmetauscher und folglich das oder die Plattenpakete aus Thermoblechen mit ihrer Einhausung unschwer in den Reaktorbehälter einbauen lassen, gleichgültig, ob dieser Reaktorbehälter einen kreisrunden oder mehreckigen Querschnitt aufweist. Stets sind solche Abstände zwischen dem oder den Plattenpaketen bzw. ihrer Einhausung und der Behälterinnenwand vorgesehen, daß eine in fertigungstechnischer Hinsicht aufwendige Anpassung nicht erforderlich ist. Denn die Erfindung hat erkannt, daß es in fertigungstechnischer Hinsicht einfach und weniger kostenaufwendig ist, einen Reaktorbehälter mit einem größeren Mantelumfang bzw. Wandumfang herzustellen, um einen Plattenwärmetauscher mit gleicher Wärmetauscherfläche bzw. Kapazität ohne Anpassung an die Behälterinnenwand einsetzen zu können als dessen Anpassung an die Behälterinnenwand unter Berücksichtigung eines kleineren Behälterquerschnittes und folglich eines kleineren Mantelumfangs oder eines kleineren Wandumfangs vornehmen zu müssen.

Im Rahmen der Erfindung kann das eingehauste Plattenpaket als mehreckiger, z. B. rechteckiger oder quadratischer Plattenwärmetauscher ausgebildet sein, wobei der Plattenwärmetauscher mit seinen Ecken der Behälterinnenwand am nähsten kommt und diese nahezu tangieren kann. Das gilt auch dann, wenn der Plattenwärmetauscher aus mehreren Plattenpaketen aufgebaut ist. Weiter empfiehlt die Erfindung, daß die Freiflächen zwischen dem Plattenwärmetauscher bzw. der Einhausung des oder der Plattenpakete und der Behälterinnenwand im oberen und unteren Bereich der Einhausung mittels Leitblechen abgedeckt sind. Bei einem kreisförmigen Behälter handelt es sich gleichsam um diese Sekantenflächen zwischen dem Behältermantel und der Einhausung. Diese Abdeckung empfiehlt sich, damit kein Reaktionsmedium austreten kann.

Im folgenden wird die Erfindung anhand einer lediglich ein Ausführungsbeispiel darstellenden Zeichnung näher erläutert; es zeigen:

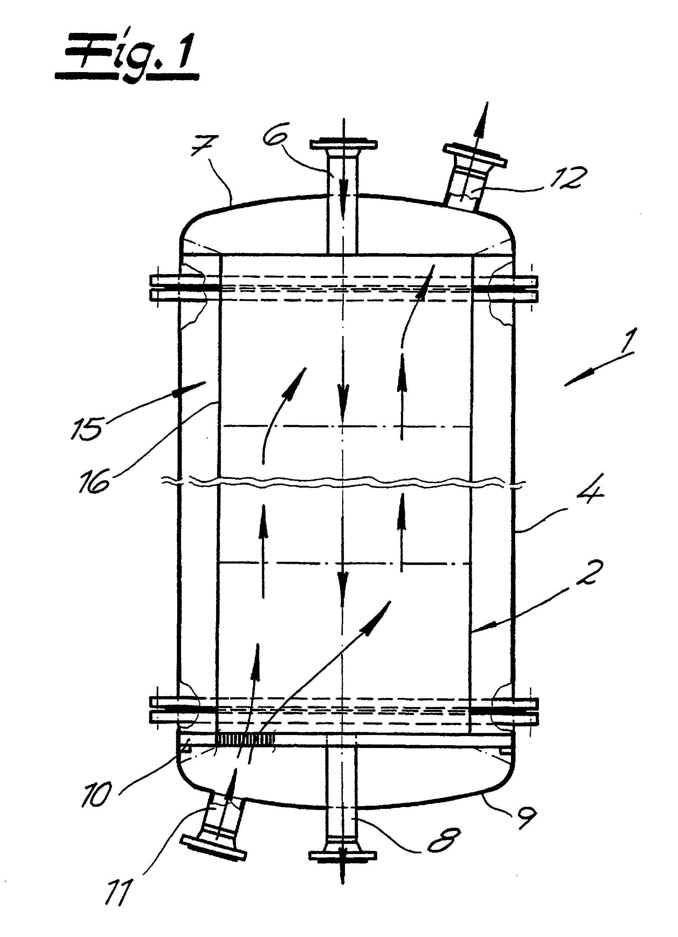

- Fig. 1: eine schematische Seitenansicht auf einen erfindungsgemäßen Reaktor,

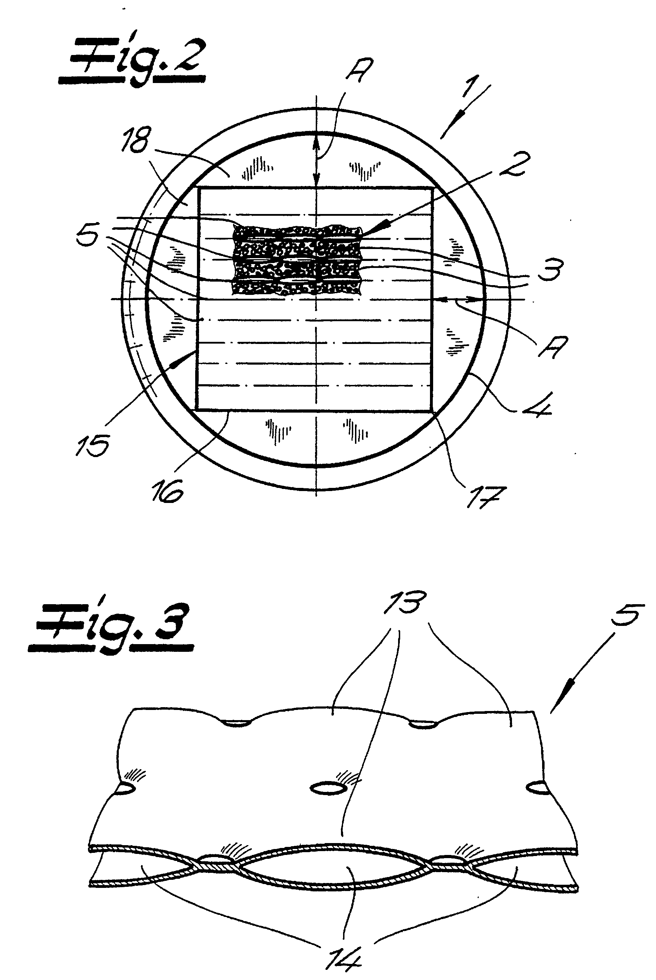

- Fig. 2: einen schematischen Horizontalschnitt durch den Gegenstand nach Fig. 1 und
- Fig. 3: ausschnittsweise ein Thermoblech in schematischer Darstellung.

In den Figuren ist ein Reaktor 1 für die katalytische Umsetzung von Reaktionsmedien, insbesondere von gasförmigen Reaktionsmedien, dargestellt. Dieser Reaktor 1 weist einen Plattenwärmetauscher 2 zum Kühlen eines Katalysators 3 in einem Reaktorbehälter 4 auf. In dem Reaktorbehälter 4 sind nebeneinander mit vorgegebenem Abstand voneinander Wärmetauscherplatten 5 angeordnet. Zwischen den Wärmetauscherplatten 5 ist der von dem jeweiligen Reaktionsmedium durchströmte Katalysator 3 unter Festbettbildung angeordnet. Ferner sind eine Kühlmediumzuführung 6 im Bereich der Behälterdecke 7 und eine Kühlmediumabführung 8 im Bereich des Behälterbodens 9 vorgesehen.

Die Wärmetauscherplatten sind als von dem Kühlmedium durchströmte Thermobleche 5 ausgebildet. Der Plattenwärmetauscher 2 aus den Thermoblechen 5 ist auf einen Siebboden 10 aufgesetzt. Der Siebboden 10 weist eine Maschenweite auf, die geringer als die Korngröße des Katalysators 3 ist, bei dem es sich um Kugeln, Zylinder od. dgl. Preßlinge handeln kann. Im Bereich des Behälterbodens 9 ist eine Reaktionsmediumzuführung 11 und im Bereich der Behälterdecke 7 eine Reaktionsmediumabführung 12 vorgesehen. Das jeweilige Reaktionsmedium ist im Gegenstrom zu dem Kühlmedium geführt. Das ist durch Pfeile angedeutet. Ein solches Gegenstromverfahren läßt sich grundsätzlich auch dann verwirklichen, wenn das Reaktionsmedium oben in den Reaktorbehälter 4 austritt und umgekehrt das Kühlmedium unten in den Reaktorbehälter 4 eintritt und oben aus dem Reaktorbehälter 4 austritt.

Der Behälterboden 9 und/oder die Behälterdecke 7, bei der es sich vorzugsweise um eine Haube handelt, sind lösbar mit dem Behältermantel des Reaktorbehälters 4 verbunden. Der Siebboden 10 ist mit dem Plattenwärmetauscher 2 und dem Katalysator 3 aus dem Reaktorbehälter 4 entfernbar.

Die Thermobleche 5 sind als im wesentlichen geradflächige punktgeschweißte Bleche mit kissenartigen Ausformungen 13 und elliptischen Strömungskanälen 14 ausgebildet und geradlinig in vertikaler Orientierung auf dem Siebboden angeordnet. Dadurch werden die Strömungsverhältnisse für einerseits das Reaktionsmedium und andererseits das Kühlmedium optimiert, weil insoweit auf die Strömung des Reaktionsmediums und Kühlmediums behindernde Umlenkungen verzichtet wird. - Die Füllhöhe des Katalysators 3 zwischen den Thermoblechen liegt bei 15 cm bis 20 cm unterhalb der Oberkante des Plattenwärmetauschers 2 bzw. seiner Thermobleche 5.

Im Rahmen der Erfindung kann sich die Reaktionsmediumzuführung 11 auch im Bereich der Behälterdecke 7 und die Reaktionsmediumabführung 12 im Bereich des Behälterbodens 9 befinden.

Die Thermobleche 5 sind zu einem Plattenpaket 15 zusammengefaßt. Das Plattenpaket 15 weist eine gegenüber dem Siebboden 10 bodenfreie Einhausung 16 auf. Das eingehauste Plattenpaket 15 ist umfangseitig anpassungsfrei und folglich mit vorgegebenen Abständen A zu der Behälterinnenwand in den Reaktorbehälter 4 eingesetzt. Die Siebbodenfläche ist an die bodenfreie Einhausungsfläche angepaßt. Das eingehauste Plattenpaket 15 ist nach dem Ausführungsbeispiel als quadratischer Plattenwärmetauscher 2 ausgebildet, weil der Reaktorbehälter 4 einen kreisrunden Querschnitt und folglich einen den quadratischen Plattenwärmetauscher 2 umgebenden Behältermantel aufweist. Folglich kommt der Plattenwärmetauscher 2 mit seinen Ecken 17 der Behälterinnenwand am nähsten und kann diese nahezu tangieren.

Die Freiflächen zwischen dem Plattenwärmetauscher 2 bzw. seiner Einhausung 16 und der Behälterinnenwand ist im oberen und unteren Bereich der Einhausung mittels Leitblechen 18 abgedeckt, um dort einen Austritt von Reaktionsmedium zu vermeiden.

## Patentansprüche

1. Reaktor für die katalytische Umsetzung von Reaktionsmedien, insbesondere von gasförmigen Reaktionsmedien, mit einem Plattenwärmetauscher zum Kühlen eines Katalysators in einem Reaktorbehälter, wobei in dem Reaktorbehälter nebeneinander mit vorgegebenem Abstand voneinander Wärmetauscherplatten angeordnet und zwischen den Wärmetauscherplatten der von dem jeweiligen Reaktionsmedium durchströmte Katalysator unter Festbettbildung angeordnet ist, mit einer Kühlmediumzuführung im Bereich der Behälterdecke und einer Kühlmediumabführung im Bereich des Behälterbodens, wobei die Wärmetauscherplatten ein von dem Kühlmedium durchströmtes Plattenpaket (oder Plattenpakete) aus Thermoblechen bilden und der Plattenwärmetauscher auf einen Siebboden aufgesetzt ist, ferner der Siebboden eine Maschenweite aufweist, die geringer als die Korngröße der Katalysatoren ist, wobei im Bereich des Behälterbodens eine Reaktionsmediumzuführung und im Bereich der Behälterdecke eine Reaktionsmediumabführung vorgesehen ist und das jeweilige Reaktionsmedium im Gegenstrom zu dem Kühlmedium geführt ist, **dadurch gekennzeichnet, daß** das Plattenpaket (15) (oder Plattenpakete) eine gegenüber dem Siebboden (10) bodenfreie Einhausung (16) aufweist und daß das eingehauste Plattenpaket (15) (oder Plattenpakete) umfangseitig anpassungsfrei in den Reaktorbehälter (4) eingesetzt ist.

2. Reaktor nach Anspruch 1, **dadurch gekennzeichnet, daß** die Siebbodenfläche an die bodenfreie Einhausungsfläche angepaßt ist.

3. Reaktor nach Anspruch 1 oder 2, **dadurch gekennzeichnet, daß** das eingehauste Plattenpaket (15) als mehreckiger, z. B. rechteckiger oder quadratischer Plattenwärmetauscher (2) ausgebildet ist und der Plattenwärmetauscher (2) mit seinen Ecken (17) der Behälterinnenwand am nähsten kommt.

4. Reaktor nach einem der Ansprüche 1 bis 3, **dadurch gekennzeichnet, daß** die Freiflächen zwischen dem Plattenwärmetauscher (2) bzw. der Einhausung (16) und der Behälterinnenwand im oberen und unteren Bereich der Einhausung (16) mittels Leitblechen (18) abgedeckt sind.

## Claims

1. A reactor for the catalytic conversion of reactants, particularly gaseous reactants, comprising a plate heat exchanger for cooling a catalyst in a reactor vessel, wherein heat exchanger plates are disposed side by side at a predetermined spacing from each other in the reactor vessel and the catalyst through which the respective reactant flows is disposed between the heat exchanger plates forming a fixed bed, comprising a coolant inlet in the region of the vessel lid and a coolant outlet in the region of the vessel base, wherein the heat exchanger plates form a plate bundle (or plate bundles) made of heat transfer plates through which the coolant flows and the plate heat exchanger is placed on a screen base, and moreover the screen base has a mesh aperture which is less than the particle size of the catalysts, wherein a reactant inlet is provided in the region of the vessel base and a reactant outlet is provided in the region of the vessel lid, and the respective reactant is conveyed counter-current to the coolant, **characterised in that** the plate bundle (15) (or plate bundles) has an internal housing (16) which is base-free in relation to the screen base (10), and that the internally housed plate bundle (15) (or plate bundles) is inserted in the reactor vessel (4) without its periphery being adapted to the reactor vessel.

2. A reactor according to claim 1, **characterised in that** the screen base area is matched to the base-free internal housing area.

3. A reactor according to claim 1 or 2, **characterised in that** the internally housed plate bundle (15) is formed as a polygonal heat exchanger, e.g. as a rectangular or square plate heat exchanger (2), and the comers (17) of the plate heat exchanger (2) very closely approach the vessel inner wall.

4. A reactor according to any one of claims 1 to 3, **characterised in that** the free areas between the plate heat exchanger (2) or the internal housing (16) and the vessel inner wall are covered by means of guide plates (18) in the upper and lower regions of the internal housing (16).

## Revendications

1. Réacteur pour la conversion catalytique de milieux réactionnels, en particulier de milieux réactionnels gazeux, comportant un échangeur de chaleur à plaques pour refroidir un catalyseur dans une cuve de réacteur, des plaques d'échangeur de chaleur étant disposées côte à côte dans la cuve de réacteur, à distance prédéfinie les unes des autres, et le catalyseur traversé par le milieu réactionnel considéré étant disposé entre les plaques d'échangeur de chaleur en formant un lit fixe, comportant une amenée de réfrigérant dans la zone du toit de la cuve et une évacuation de réfrigérant dans la zone du fond de la cuve, les plaques d'échangeur de chaleur formant un paquet de plaques (ou des paquets de plaques) traversé par le réfrigérant et l'échangeur de chaleur à plaques étant placé sur un fond perforé, le fond perforé présentant en outre une dimension de mailles qui est inférieure à la grosseur des grains des catalyseurs, une amenée de milieu réactionnel étant prévue dans la zone du fond de la cuve et une évacuation de milieu réactionnel étant prévue dans la zone du toit de la cuve, et le milieu réactionnel étant guidé à contre-courant par rapport au réfrigérant, **caractérisé en ce que** le paquet de plaques (15) (ou les paquets de plaques) comporte une enveloppe (16) sans fond par rapport au fond perforé (10) et **en ce que** le paquet de plaques (15) (ou les paquets de plaques) enveloppé est inséré périphériquement sans adaptation dans la cuve de réacteur (4).

2. Réacteur selon la revendication 1, **caractérisé en ce que** la surface du fond perforé est adaptée à la surface de l'enveloppe sans fond.

3. Réacteur selon la revendication 1 ou 2, **caractérisé en ce que** le paquet de plaques (15) enveloppé est réalisé comme échangeur de chaleur à plaques (2) polygonal, par ex. rectangulaire ou carré, et l'échangeur de chaleur à plaques (2) s'approche au plus près, par ses angles (17), de la paroi intérieure de la cuve.

4. Réacteur selon l'une revendications 1 à 3, **caractérisé en ce que** les surfaces libres entre l'échangeur de chaleur à plaques (2) ou l'enveloppe (16) et la paroi intérieure de la cuve sont recouvertes par des tôles de guidage (18) dans la zone supérieure et la zone inférieure de l'enveloppe (16).
